# EUROPEAN PATENT APPLICATION

(11) **EP 4 503 510 A1**
(43) Date of publication of application: **05.02.2025**
(21) Application number: 24188567.2
(22) Date of filing: 15.07.2024
(51) Int. Cl.: H04L 9/32

(54) **ACTIVE TRANSISTOR PHYSICAL UNCLONABLE FUNCTION (PUF) CIRCUIT WITH MEMS UNIQUENESS**

(30) Priority: 01.08.2023 US 202363516949 P; 10.05.2024 US 202418661426
(71) Applicant: Honeywell International Inc., Charlotte, NC 28202 (US)
(72) Inventor: TUCKER, James L., Charlotte, 28202 (US)
(74) Representative: Haseltine Lake Kempner LLP

(57) **Abstract**

Systems and methods for an active transistor PUF circuit with MEMS uniqueness are described herein. In one example, a PUF circuit includes one or more MEMS structures configured to provide an output, wherein the output includes active oscillations, charge, resistance, inductance, and/or capacitance values. The PUF circuit further includes active transistor PUF circuitry communicatively coupled to the one or more MEMS structures. The active transistor PUF circuitry is configured to receive a challenge input and generate a PUF response in response to the challenge input. The PUF response is generated based on the output provided by the one or more MEMS structures and manufacturing variation in components of the active transistor PUF circuitry. The PUF response generated by the active transistor PUF circuitry is an output of the PUF circuit.

## Description

### CROSS-REFERENCE TO RELATED APPLICATIONS

This application claims priority to U.S. Provisional Application No. 63/516,949, filed on August 1, 2023, and titled "DUAL USE MICROELECTROMECHANICAL SYSTEM (MEMS) DEVICE," the contents of which are incorporated by reference herein in their entirety.

This application is related to: United States Patent Application serial number 18/661,373 (attorney docket number H232672-US2) entitled "DUAL USE MICROELECTROMECHANICAL SYSTEM (MEMS) DEVICE" filed on even date herewith; United States Patent Application serial number 18/661,400 (attorney docket number H233692-US) entitled "CODEPENDENT PHYSICAL UNCLONABLE FUNCTION/RANDOM NUMBER GENERATOR PAIRING FOR PHYSICAL PROVENANCE" filed on even date herewith; United States Patent Application serial number 18/661,416 (attorney docket number H233693-US) entitled "MEMS BASED PUF FOR MECHANICAL TRUST EXTENSION" filed on even date herewith; United States Patent Application serial number 18/661,437 (attorney docket number H233699-US) entitled "ACTIVE TRANSISTOR RANDOM NUMBER GENERATOR (RNG) CIRCUIT WITH MEMS ENTROPY" filed on even date herewith; all of which are incorporated herein by reference in their entirety.

### BACKGROUND

Systems that can provide assurance as to the identity of hardware within the systems are needed for cryptography. This capability provides the means to improve the ability to meet and maintain network integrity. Commercial systems need technology that can be integrated into an electronic system, via mounting, packaging, potting, that can provide a unique digital identification to the software, such that physical changes will permanently change the resulting digital identification. The identity can then be encoded into the cryptographic processes of the hardware system. Systems should be capable of validating the identity of hardware so that altering hardware changes the identifier.

### SUMMARY

In some aspects, a physical unclonable function (PUF) circuit is described herein. The PUF circuit includes one or more micro-electromechanical systems (MEMS) structures configured to provide an output, wherein the output includes active oscillations, charge, resistance, inductance, and/or capacitance values. The PUF circuit further includes active transistor PUF circuitry communicatively coupled to the one or more MEMS structures. The active transistor PUF circuitry is configured to receive a challenge input and generate a PUF response in response to the challenge input. PUF response is generated based on the output provided by the one or more MEMS structures and manufacturing variation in components of the active transistor PUF circuitry. The PUF response generated by the active transistor PUF circuitry is an output of the PUF circuit.

In some aspects, a device is described herein. The device includes a PUF circuit. The PUF circuit includes one or more micro-electromechanical systems (MEMS) structures configured to provide active oscillations, charge, resistance, inductance, and/or capacitance values. The PUF circuit further includes active transistor PUF circuitry communicatively coupled to the one or more MEMS structures. The active transistor PUF circuitry is configured to receive a challenge input and output a PUF response in response to the challenge input. The PUF response output by the active transistor PUF circuitry is generated based on the active oscillations, charge, resistance, inductance, and/or capacitance values output by the one or more MEMS structures and manufacturing variation in components of the active transistor PUF circuitry. The device further includes one or more additional circuits configured to generate the challenge input and/or utilize the PUF response for one or more cryptographic processes.

In some aspects, a method is described herein. The method includes receiving, with active transistor physical unclonable function (PUF) circuitry of a PUF circuit, a PUF challenge. The PUF circuit further includes one or more MEMS structures communicatively coupled to the active transistor PUF circuitry. The method further includes, in response to the PUF challenge, generating a PUF response to the PUF challenge, based on the active oscillations, charge, resistance, inductance, and/or capacitance values output by the one or more MEMS structures and manufacturing variation in components of the active transistor PUF circuitry. The method further includes outputting the PUF response to an additional circuit.

### BRIEF DESCRIPTION OF THE DRAWINGS

Understanding that the drawings depict only some embodiments and are not therefore to be considered limiting in scope, the exemplary embodiments will be described with additional specificity and detail using the accompanying drawings, in which:
FIGS. 1A-1B are block diagrams of an example physical unclonable function (PUF) circuit that includes MEMS structure(s) and active transistor PUF circuitry;
FIGS. 2A-2C are diagrams of example configurations of a PUF circuit that includes MEMS structure(s) and active transistor PUF circuitry based on different fabrication techniques; and
FIG. 3 is a block diagram of an example system.

In accordance with common practice, the various described features are not drawn to scale but are drawn to emphasize specific features relevant to the example embodiments.

### DETAILED DESCRIPTION

In the following detailed description, reference is made to the accompanying drawings that form a part hereof, and in which are shown by way of illustration specific illustrative embodiments. However, it is to be understood that other embodiments may be utilized, and that logical, mechanical, and electrical changes may be made. Furthermore, the method presented in the drawing figures and the specification is not to be construed as limiting the order in which the individual steps may be performed. The following detailed description is, therefore, not to be taken in a limiting sense.

The examples described herein include a hybrid PUF circuit that includes one or more micro-electromechanical systems (MEMS) structures and active transistor physical unclonable function (PUF) circuitry that utilizes MEMS structures to provide a source of device uniqueness. The active transistor PUF circuitry can utilize different PUF topologies that rely on transistor manufacturing variation and that are provided with MEMS outputs that will change based on physical properties of the one or more MEMS structures. The one or more MEMS structures may be active or passive and configured to alter the PUF output by providing active oscillations, charge, resistance, inductance, and/or capacitance values as the MEMS outputs. Different PUF circuit topologies can be used along with the unique properties of MEMS structures to produce a PUF circuit that is small, low-power, and that provides low latency PUF outputs.

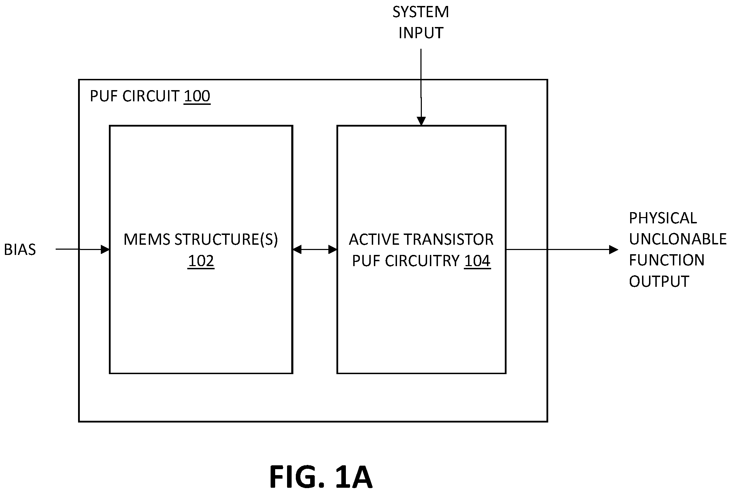

FIG. 1A is a block diagram of an example physical unclonable function (PUF) circuit 100. In the example shown in FIG. 1A, the PUF circuit 100 is implemented using a combination of one or more MEMS structures 102 and active transistor PUF circuitry 104. In some examples, the PUF circuit 100 is an example implementation of the PUF circuitry described in copending application United States Patent Application serial number 18/661,400 (attorney docket number H233692-US) entitled "CODEPENDENT PHYSICAL UNCLONABLE FUNCTION/RANDOM NUMBER GENERATOR PAIRING FOR PHYSICAL PROVENANCE."

In some examples, the one or more MEMS structures 102 includes a single MEMS structure. In other examples, the one or more MEMS structures 102 includes a plurality of MEMS structures. The one or more MEMS structures 102 may be any type of MEMS device such as an accelerometer, a gyroscope, a pressure sensor, a temperature sensor, airflow sensor, or other similar MEMS structures. When included in the PUF circuit 100, the one or more MEMS structures 102 can function as a further source of uniqueness for the active transistor PUF circuitry 104.

In some examples, the one or more MEMS structures 102 include one or more PUF MEMS structures that are used exclusively for the PUF circuit 100. In other examples, the one or more MEMS structures 102 include one or more shared MEMS structures that are shared with another circuit (for example, a random number generator (RNG) circuit). In some such examples, an RNG circuit generates a sequence of numbers or symbols that cannot be reasonably predicted better than by random chance or extracts randomness from physical phenomena to generate numbers (for example, a True RNG). In some examples, the one or more MEMS structures 102 include both one or more PUF MEMS structures that are used exclusively for the PUF circuit 100 and one or more shared MEMS structures that are shared with another circuit.

The one or more MEMS structures 102 are configured to alter the PUF output by providing active oscillations, charge, resistance, inductance, and/or capacitance values to the active transistor PUF circuitry 104. In some examples, the one or more MEMS structures 102 are active components. In other examples, the one or more MEMS structures 102 are passive components.

In some examples, the components of the active transistor PUF circuitry 104 are implemented using a transistor-based integrated circuit. For example, the active transistor PUF circuitry 104 can be implemented in an application-specific integrated circuit (ASIC) or another type of integrated circuit.

In some examples, the active transistor PUF circuitry 104 includes, but is not limited to, circuitry that is configured to produce a corresponding PUF response based on a particular PUF challenge that is input to the system. For example, if the active transistor PUF circuitry 104 is configured to implement a ring oscillator PUF, the active transistor PUF circuitry 104 can include an array of ring oscillator loops coupled to multiplexers, frequency counters, comparison circuitry, and the like.

In some examples, the active transistor PUF circuitry 104 is used exclusively for the PUF circuit 100. In other examples, at least some components of the active transistor PUF circuitry 104 of the PUF circuit 100 are shared with another circuit (for example, a random number generator (RNG) circuit).

In some examples, the circuit connections between the one or more MEMS structures 102 and the active transistor PUF circuitry 104 enable the operation of the one or more MEMS structures 102 to be influenced by the active transistor PUF circuitry 104 and vice versa as shown in FIG. 1A using the bidirectional arrows between these components. In such examples, the one or more MEMS structures 102 should affect the active transistor PUF circuitry 104 and the active transistor PUF circuitry 104 should affect the one or more MEMS structures 102 such that these components of the PUF circuit 100 are codependent. In some examples, a change to the one or more MEMS structures 102 or the active transistor PUF circuitry 104 results in a change to the PUF output from the PUF circuit 100. These features help to prevent a situation where the MEMS structures 102 could be removed, characterized, and replaced in order to spoof or modify operation of the PUF circuit 100 for nefarious purposes.

In the example shown in FIG. 1A, the PUF circuit 100 is configured to receive a system input (for example, an input from a user). In particular, the active transistor PUF circuitry 104 is configured to receive the system input. In some examples, the system input includes one or more challenges (for example, challenge bits), and the PUF circuit 100 is configured to output a response to the one or more challenges. In the example shown in FIG. 1A, the PUF circuit 100 is configured to produce a unique PUF output that corresponds to the particular challenge input. The particular components of the PUF circuit 100 can be selected and configured to implement a variety of PUF architectures (for example, arbiter, ring oscillator, etc.) and can include a variety of different electronic components.

In the example shown in FIG. 1A, the one or more MEMS structures 102 are configured to receive a bias input, which can be used to produce different PUF outputs in combination with the system input. In some examples, the bias input is static and is designed to not change during operation. In other examples, the bias input is dynamic and can be reconfigured during operation. In some such examples, the bias input is used as part of the PUF challenge in addition to the system input as discussed above. In some examples, one or more inputs in addition to, or instead of, the bias input can be used as part of the PUF challenge in addition to the system input as discussed above.

In some examples, the bias input originates from the active transistor PUF circuitry 104. In some such examples, the bias input originates from the active transistor PUF circuitry 104 in the form of an independent generator as part of the PUF challenge. In other examples, the bias input originates from the active transistor PUF circuitry 104 as direct feedback from unique parts of the active transistor PUF circuitry 104, but is not part of the PUF challenge. In some such examples, the output of part of the active transistor PUF circuitry 104 is conditioned to bring any digital oscillation down to the appropriate level required for safe input to the one or more MEMS structures 102. In some examples, the bias input can originate from the active transistor PUF circuitry 104 using a combination of the techniques discussed above. For example, the bias input can be impacted by both an independent generator and direct feedback from unique parts of the active transistor PUF circuitry 104.

In the example shown in FIG. 1A, the uniqueness of the PUF outputs is impacted by the noise and uncontrollable factors inherent in the materials of construction, fabrication processes, etc. of the active transistor PUF circuitry 104 and the one or more MEMS structures 102. In general, the uniqueness of the PUF output of the PUF circuit 100 is increased by using the active oscillations, charge, resistance, inductance, and/or capacitance values output from the one or more MEMS structures 102 in addition to the active transistor PUF circuitry 104 compared to a PUF circuit that only includes active transistor circuitry.

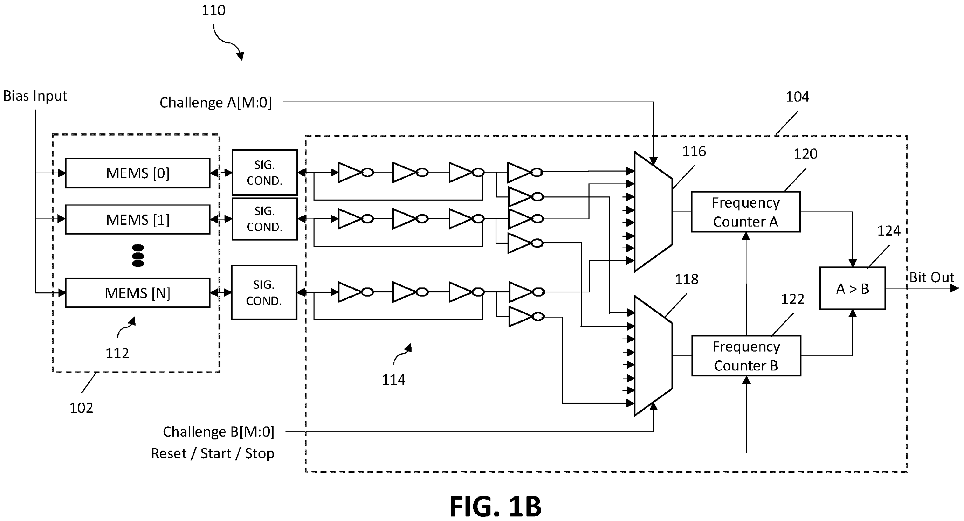

FIG. 1B is a block diagram of an example physical unclonable function (PUF) circuit 110. In the example shown in FIG. 1B, the PUF circuit 110 is implemented using a combination of one or more MEMS structures 102 and active transistor PUF circuitry 104. In some examples, the PUF circuit 110 is an example implementation of the PUF circuitry described in copending application United States Patent Application serial number 18/661,400 (attorney docket number H233692-US) entitled "CODEPENDENT PHYSICAL UNCLONABLE FUNCTION/RANDOM NUMBER GENERATOR PAIRING FOR PHYSICAL PROVENANCE."

The example PUF circuit 110 shown in FIG. 1B is one specific example of the PUF circuit 100 described above with respect to FIG. 1A. In the example shown in FIG. 1B, the PUF circuit 110 implements a ring oscillator PUF topology. It should be understood that different topologies (for example, arbiter or other PUF topologies) for the active transistor PUF circuitry 104 could also be used in combination with the one or more MEMS structures 102 to implement the PUF circuit 100.

In the example shown in FIG. 1B, the one or more MEMS structures 102 includes an array of N MEMS structures 112. The MEMS structures 112 are configured to output active oscillations, charge, resistance, inductance, and/or capacitance values to the ring oscillator loops 114. The MEMS structures 112 contribute unique variation to the ring oscillator loops 114, and the measurement used for generating the PUF output (shown as Bit Out in FIG. 1B) is relative from one ring oscillator loop 114 to another ring oscillator loop 114.

In the example shown in FIG. 1B, the active transistor PUF circuitry 104 includes an array of ring oscillator loops 114 that each include the same number of inverter components. In the example shown in FIG. 1B, the frequency of each of the ring oscillator loops 114 is a function of the active oscillations, charge, resistance, inductance, and/or capacitance effects from a respective MEMS structure 112 coupled to the inverter loop that oscillates at a specific frequency. In the example shown in FIG. 1B, each of the ring oscillator loops 114 includes three inverters, but it should be understood that other odd numbers of inverters could also be used for the ring oscillator loops 114.

In the example shown in FIG. 1B, each of the MEMS structures 112 is biased using the same bias input, which can be used to alter the behavior of the MEMS structures 112 to result in different PUF output values. In other examples, there can be asymmetry in the biasing of the MEMS structures 112. For example, at least one of the MEMS structures 112 may be individually biased in that the at least one MEMS structure 112 is biased with a distinct bias input compared to the other MEMS structures 112.

In some examples, the bias input originates from the active transistor PUF circuitry 104. In some such examples, the bias input originates from the active transistor PUF circuitry 104 in the form of an independent generator as a challenge as described below. In other examples, the bias input originates from the active transistor PUF circuitry 104 as direct feedback from unique parts of the active transistor PUF circuitry 104 not as part of a challenge. In such examples, the output of part of the active transistor PUF circuitry 104 is conditioned to bring any digital oscillation down to the appropriate level required for safe input to the MEMS structures 112. In the example shown in FIG. 1B, the MEMS structures 112 can be configured to oscillate as with the ring oscillator loops 114 based on the bias input or to use the bias input to prevent oscillation created by the transistor ring oscillator point of connection. In some examples, the bias input can originate from the active transistor PUF circuitry 104 using a combination of the techniques discussed above. For example, the bias input can be impacted by both an independent generator and direct feedback from unique parts of the active transistor PUF circuitry 104.

In the example shown in FIG. 1B, each of the MEMS structures 112 is coupled to a respective ring oscillator loop 114, and each ring oscillator loop 114 is coupled to a MEMS structure 112. In other examples, there can be asymmetry in the configuration of the MEMS structures 112 and the ring oscillator loops 114. For example, one or more ring oscillator loops 114 may not be coupled to a MEMS structure 112 and thus does not receive the active oscillations, charge, resistance, inductance, and/or capacitance value from a MEMS structure 112.

In the example shown in FIG. 1B, each of the MEMS structures 112 is coupled to the ring oscillator loops 114 via a signal conditioning block. In some examples, the signal conditioning block is configured to perform one or more signal conditioning functions on signals communicated from the MEMS structure 112 to the ring oscillator loop 114 or from the ring oscillator loop 114 to the MEMS structure 112. In some examples, the signal conditioning block includes AC coupling circuitry, a voltage divider, and/or other circuitry. In some examples, the signal conditioning block is configured to perform level conversion, amplification, DC offset isolation (for example, using AC coupling), and/or other signal conditioning functions. In some examples, the signal conditioning block used to interface between a respective MEMS structure 112 and a respective ring oscillator loop 114 provides a unique interface between the respective MEMS structure 112 and the respective ring oscillator loop 114.

In general, it is better to have symmetry for the bias input and for a ring oscillator PUF circuit such that variation between the frequency of the ring oscillator loops 114 is based on the active oscillations, charge, resistance, inductance, and/or capacitance effects from a respective MEMS structure 112 and the manufacturing variation for the components of the ring oscillator loops 114.

In the example shown in FIG. 1B, the active transistor PUF circuitry 104 further includes a first multiplexer 116 and a second multiplexer 118 that are each communicatively coupled to each of the ring oscillator loops in the array of ring oscillator loops 114.

The first multiplexer 116 is configured to select a particular frequency from one or the ring oscillator loops 114 to output to the first frequency counter 120 (Frequency Counter A) based on the challenge A input provided to the first multiplexer 116. Similarly, the second multiplexer 118 is configured to select a particular frequency from one or the ring oscillator loops 114 to output to the second frequency counter 122 (Frequency Counter B) based on the challenge B input provided to the second multiplexer 118. The challenge A input and challenge B input to the first multiplexer 116 and the second multiplexer 118, respectively, determine which of the ring oscillator loops 114 is selected for comparison.

The count values of the first frequency counter 120 and the second frequency counter 122 are compared to each other using comparator 124. Depending on the result of the comparison by the comparator 124, a single PUF bit is output (shown as Bit Out in FIG. 1B). The Bit Out is a function of the challenge A input, the challenge B input, and the bias applied to the MEMS structures 112. The particular function that determines the Bit Out depends on the active oscillations, charge, resistance, inductance, and/or capacitance values output from the MEMS structures 112. In some examples, the PUF output can be a single bit (as shown in FIG. 1B) or a series of bits. In examples where the PUF output is a series of bits, the series of bits can be time separated or produced by multiple PUF circuits operating in parallel.

In the example shown in FIG. 1B, a start/stop/reset count is provided to both first frequency counter 120 and second frequency counter 122. The start and stop counts set a period of time that the output frequencies from the first multiplexer 116 and the second multiplexer 118 are counted. The reset count is provided in order to reset the first frequency counter 120 and the second frequency counter 122 after the set period of time has expired.

As discussed above, each PUF circuit 110 will provide a different and unique PUF output that depends on the challenge A input, the challenge B input, and the bias input applied to the MEMS structures 112. In some examples, the bias input(s) received by the MEMS structures 112 is also used to produce different PUF outputs in combination with the challenge inputs provided to the first multiplexer 116 and the second multiplexer 118, so the bias input can also used as part of the PUF challenge. In some examples, one or more inputs in addition to, or instead of, the bias input can be used as part of the PUF challenge in addition to the system input as discussed above.

In examples where the bias input is dynamic and used as part of the PUF challenge, the MEMS structures 112 associated with the ring oscillator loops 114 selected by the first multiplexer 116 and the second multiplexer 118 based on the challenge inputs A and B, respectively, are manipulated as part of the challenge inputs. In such examples, the MEMS structures 112 will exhibit different behavior and output different active oscillations, charge, resistance, inductance, and/or capacitance values depending on the particular challenge bias input. For example, each of the MEMS structures 112 can be made to resonate, which would introduce frequency variation into the ring oscillator loops 114. By outputting different active oscillations, charge, resistance, inductance, and/or capacitance values, the frequencies of the corresponding ring oscillator loops 114 are altered, and thus the result of the comparison by the comparator 124 can be different, which would lead to a different PUF output. A PUF circuit 110 that uses both the multiplexer selection and dynamic bias input to the MEMS structures 112 as part of the PUF challenge will produce a more dynamic PUF result, which makes it harder to spoof the PUF circuit 110 since each of the MEMS structures 112 responds to bias or stimulation differently.

While a single instance of the PUF circuit 100, 110 is shown in FIGS. 1A-1B, it should be understood that other configurations are also possible. For example, more than one instance of PUF circuit 100, 110 can be included in a single device or system (for example, to produce a series of bits). Further, the PUF circuit 100, 110 can be integrated into a larger device or system that includes additional circuitry beyond that shown for the PUF circuit 100, 110 for performing additional functions that generate the system input for the PUF circuit 100, 110 and/or utilize the PUF output for cryptographic processes.

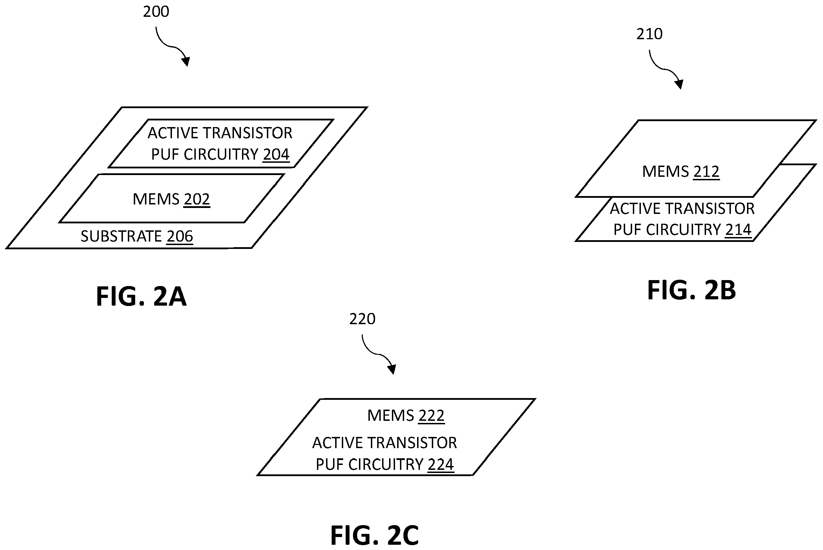

FIGS. 2A-2C are diagrams of example PUF circuits that include one or more MEMS structures and active transistor PUF circuitry produced using different fabrication techniques. The examples configurations of PUF circuits and fabrication techniques discussed with respect to FIGS. 2A-2C is not meant to be exhaustive. It should be understood that other configurations of PUF circuits that includes one or more MEMS structures and active transistor PUF circuitry could also be produced using other fabrications techniques.

FIG. 2A illustrates a diagram of a PUF circuit 200 that includes one or more MEMS structures 202 and active transistor PUF circuitry 204 and is produced using a first fabrication technique.

In the example shown in FIG. 2A, the one or more MEMS structures 202 are fabricated separately from the active transistor PUF circuitry 204 and connected to the active transistor PUF circuitry 204 using a substrate 206. In some examples, the one or more MEMS structures 202 and the active transistor PUF circuitry 204 can be fabricated on separate dies and then the one or more MEMS structures 202 and the active transistor PUF circuitry 204 are mounted on the substrate 206. In some examples, the one or more MEMS structures 202 are separately packaged from the active transistor PUF circuitry 204 and connected on a circuit board.

In order to connect the one or more MEMS structures 202 to the active transistor PUF circuitry 204, interconnects are used between the one or more MEMS structures 202 and the active transistor PUF circuitry 204. It is beneficial to reduce the length of the interconnects between the one or more MEMS structures 202 and the active transistor PUF circuitry 204 since longer interconnects introduce undesirable unpredictability to the PUF circuit 200. Therefore, in some implementations of the example PUF circuit 200, the one or more MEMS structures 202 and the active transistor PUF circuitry 204 are positioned as close a feasible on the substrate 206.

FIG. 2B illustrates a diagram of a second PUF circuit 210 that includes one or more MEMS structures 212 and active transistor PUF circuitry 214 and is produced using a second fabrication technique.

In the example shown in FIG. 2B, the one or more MEMS structures 212 are fabricated separately from the active transistor PUF circuitry 214 and stacked on top of the active transistor PUF circuitry 214. In some examples, the one or more MEMS structures 212 and the active transistor PUF circuitry 214 can be fabricated on separate dies and then the one or more MEMS structures 212 are stacked on top of the active transistor PUF circuitry 214. In some examples, the one or more MEMS structures 212 are separately packaged from the active transistor PUF circuitry 214 and stacked on top of the active transistor PUF circuitry 214 (for example, on a circuit board).

In order to connect the one or more MEMS structures 212 to the active transistor PUF circuitry 214, vertical interconnects are used between the one or more MEMS structures 212 and the active transistor PUF circuitry 214. Vertical connections are generally more effective at reducing the length of the interconnects between the one or more MEMS structures 212 and the active transistor PUF circuitry 214 compared to the interconnects used in FIG. 2A. When the one or more MEMS structures 212 are aligned with corresponding components of the active transistor PUF circuitry 214, the length of the interconnects is further reduced. Therefore, in some implementations of the example PUF circuit 210, the one or more MEMS structures 212 and the active transistor PUF circuitry 214 are stacked and aligned to reduce the length of the vertical interconnects as much as possible. In some situations, vertical stacking of the one or more MEMS structures 212 and the active transistor PUF circuitry 214 can also provide improved resistance to physical tampering.

FIG. 2C illustrates a diagram of a third PUF circuit 220 that includes one or more MEMS structures 222 and active transistor PUF circuitry 224 and is produced using a third fabrication technique.

In the example shown in FIG. 2C, the one or more MEMS structures 222 are fabricated with the active transistor PUF circuitry 224. In some examples, the one or more MEMS structures 222 and the active transistor PUF circuitry 224 can be fabricated on the same die and then the one or more MEMS structures 202 are stacked on top of the active transistor PUF circuitry 204.

In order to connect the one or more MEMS structures 222 to the active transistor PUF circuitry 224, interconnects are used between the one or more MEMS structures 222 and the active transistor PUF circuitry 224. Since the one or more MEMS structures 222 and the active transistor PUF circuitry 224 are fabricated on the same die, the one or more MEMS structures 222 and the active transistor PUF circuitry 224 will be closer together. Thus, the length of the interconnects between the one or more MEMS structures 222 and the active transistor PUF circuitry 224 are shorter compared to the interconnects used in FIG. 2A. In some implementations of the example PUF circuit 220, the one or more MEMS structures 222 and the active transistor PUF circuitry 224 are positioned as close a feasible on the same die.

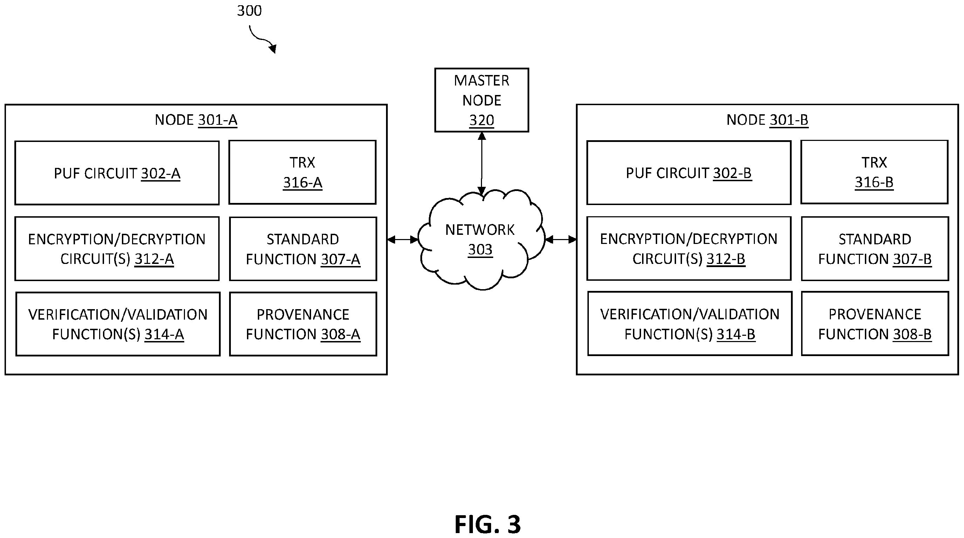

FIG. 3 is a block diagram of a system 300 that includes secure communication between nodes 301 in an exclusive community over a network 303 using a unique component generated by PUF circuits 302 in the nodes 301. Examples of protocols for creating the unique component from the PUF circuit 302 are described in more detail herein.

In the example shown in FIG. 3, system 300 is illustrated with two nodes 301 labelled as node 301-A and node 301-B. It is understood that the system 300 may include any appropriate number of nodes 301 and thus the system 300 is not limited to a system with two nodes 301. Further, FIG. 3 illustrates the node 301-A is coupled to the node 301-B over the network 303. It is understood that network 303 may comprise one or more of a wireless access point, comm link, wide area network (WAN), local area network (LAN) such as an Ethernet network, cable group, optical fiber, direct connection, or any other appropriate system for communicatively coupling nodes 301 of system 300.

In the example shown in FIG. 3, the node 301-A and the node 301-B each include similar components for secure communication in the system 300. Therefore, for simplicity and brevity, only the node 301-A is described in detail using reference numerals for each component followed by the designator "-A." It is understood that similar components are also included in the node 301-B identified by the same reference numeral followed by the designator "-B."

In the example shown in FIG. 3, the node 301-A includes a PUF circuit 302-A. In some examples, the PUF circuit 302-A can be implemented as PUF circuit 100 or PUF circuit 110 as discussed above with respect to FIGS. 1A-1B. In some examples, the PUF circuit 302-A supports two or more functions for the node 301-A by providing one or more outputs. In some examples, the outputs can include a standard component and a unique component. In some examples, the unique component includes a PUF response output as discussed above.

A first function supported by PUF circuit 302-A uses the standard component of the outputs from the PUF circuit 302-A. For example, the PUF circuit 302-A may comprise a sensor (for example, a MEMS sensor) and the standard component may be a measurement of acceleration, rotation rate, pressure, temperature, airflow, or other measurements associated with the sensor.

A second function supported by PUF circuit 302-A uses the unique component for secure communication with other nodes 301 of system 300. In some examples, the PUF circuit 302-A enables harvesting the unique component due to process variations during fabrication that create unique aspects to the PUF circuit 302-A. In some examples, the unique component output by the PUF circuit 302-A can be derived from active transistor circuitry and/or one or more MEMS structures included in the PUF circuit 302-A.

In some examples, the node 301-A also includes one or more processors and memory for storing software or instructions to implement functions for node 301-A. In the example shown in FIG. 3, the node 301-A includes a standard function 307-A to support the first function of node 301-A. Standard function 307-A uses, among other things, the standard component of outputs of the PUF circuit 302-A such that node 301-A implements its standard function that is implemented based on outputs of PUF circuit 302-A.

Also, the node 301-A includes instructions or software to implement the second function of node 301-A. In the example shown in FIG. 3, the node 301-A includes provenance function 308-A, encryption/decryption circuit 312-A, and verification/validation function 314-A. In some examples, the PUF circuit 302-A is configured to output a PUF response output from PUF circuitry, and the PUF output is used in conjunction with verification/validation function 314-A to implement authentication that data received or transmitted by node 301-A is from an authorized node in system 300. In some examples, the provenance function 308-A uses a unique component from PUF circuit 302-A to implement a PUF for node 301-A, and the provenance function 308-A is used in conjunction with verification/validation function 314-A to implement authentication that data received or transmitted by node 301-A is from an authorized node in system 300.

In the example shown in FIG. 3, the system 300 also includes a master node 320 that is used to set up the trusted relationship amongst the nodes 301 of system 300 that are in the exclusive community. The master node 320 is communicatively coupled to each of the nodes 301 via the network 303.

In some examples, each respective node 301 generates a number of registries (for example, thousands or tens of thousands of registries) using provenance function 308 and the unique component of outputs of PUF circuit 302-A of the respective node 301. These registries uniquely identify the specific node 301 as part of the trusted system 300. The master node 320 obtains the registries generated by each node 301 (for example, at the time a node 301 is set up) and provides the registries to all other nodes 301 in system 300. These registries are stored as part of the provenance function 308 of each node 301 in the exclusive community and become, in effect, a library of authorized users in the exclusive community for system 300. By using these registry values, a given node 301 will only recognize data received from like-equipped nodes 301. When data is received over network 303, the receiving node 301 will use the registries in provenance function 308 along with verification/validation function 314 to authenticate the input as originating with an authorized user. For example, the receiving node 301 can verify that the node 301 sending the data has produced an output of a provenance function 308 that corresponds to one of the registries provided by the master node 320 and included in its own provenance function 308.

In other examples, the master node 320 is configured to operate as a certificate authority/certification authority (CA) for applications that use asymmetric cryptography. In such examples, the master node 320 is configured to issue digital certificates to the nodes 301 and the verification/validation function 314 uses the issued digital certificates to authenticate the input as originating with an authorized user.

In the example shown in FIG. 3, the node 301-A also includes a transceiver 316-A that provides an interface for communicating with other nodes 301, e.g., node 301-B, over network 303. While a single transceiver 316-A is shown in FIG. 3, it should be understood that the single transceiver 316-A could be replaced with separate and distinct transmitter and receiver components.

In various aspects, system elements, method steps, or examples described throughout this disclosure (such as the devices, system, or components thereof, for example) may be implemented on one or more computer systems including a central processing unit (CPU), graphics processing unit (GPU), field programmable gate array (FPGA), application specific integrated circuit (ASIC) and/or similar devices comprising hardware executing code to realize those elements, processes, or examples, said code stored on a non-transient data storage device. These devices include or function with software programs, firmware, or other computer readable instructions for carrying out various methods, process tasks, calculations, and control functions.

These instructions are typically stored on any appropriate computer readable medium used for storage of computer readable instructions or data structures. The computer readable medium can be implemented as any available media that can be accessed by a general purpose or special purpose computer or processor, or any programmable logic device. Suitable processor-readable media may include storage or memory media such as magnetic or optical media. For example, storage or memory media may include conventional hard disks, Compact Disk-Read Only Memory (CD-ROM), volatile or non-volatile media such as Random Access Memory (RAM) (including, but not limited to, Synchronous Dynamic Random Access Memory (SDRAM), Double Data Rate (DDR) RAM, RAMBUS Dynamic RAM (RDRAM), Static RAM (SRAM), etc.), Read Only Memory (ROM), Electrically Erasable Programmable ROM (EEPROM), and flash memory, etc. Suitable processor-readable media may also include transmission media such as electrical, electromagnetic, or digital signals, conveyed via a communication medium such as a network and/or a wireless link.

The methods and techniques described here may be implemented, in part, in digital electronic circuitry, or with a programmable processor (for example, a special-purpose processor or a general-purpose processor such as a computer) firmware, software, or in combinations of them. Apparatus embodying these techniques may include appropriate input and output devices, a programmable processor, and a storage medium tangibly embodying program instructions for execution by the programmable processor. A process embodying these techniques may be performed by a programmable processor executing a program of instructions to perform desired functions by operating on input data and generating appropriate output. The techniques may advantageously be implemented in one or more programs that are executable on a programmable system including at least one programmable processor coupled to receive data and instructions from, and to transmit data and instructions to, a data storage system, at least one input device, and at least one output device. Generally, a processor will receive instructions and data from a read-only memory and/or a random-access memory. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and DVD disks. Any of the foregoing may be supplemented by, or incorporated in, specially-designed application-specific integrated circuits (ASICs).

### EXAMPLE EMBODIMENTS

Example 1 includes a physical unclonable function (PUF) circuit, comprising: one or more micro-electromechanical systems (MEMS) structures configured to provide an output, wherein the output includes active oscillations, charge, resistance, inductance, and/or capacitance values; and active transistor PUF circuitry communicatively coupled to the one or more MEMS structures; wherein the active transistor PUF circuitry is configured to receive a challenge input and generate a PUF response in response to the challenge input, wherein the PUF response is generated based on the output provided by the one or more MEMS structures and manufacturing variation in components of the active transistor PUF circuitry; wherein the PUF response generated by the active transistor PUF circuitry is an output of the PUF circuit.

Example 2 includes the PUF circuit of Example 1, wherein one or more MEMS structures and/or the active transistor PUF circuitry is used exclusively for the PUF circuit.

Example 3 includes the PUF circuit of any of Examples 1-2, wherein the one or more MEMS structures include only a single MEMS structure.

Example 4 includes the PUF circuit of any of Examples 1-3, wherein the one or more MEMS structures include a plurality of MEMS structures.

Example 5 includes the PUF circuit of Example 4, wherein the PUF circuit further comprises a respective signal conditioning circuit coupled between each respective MEMS structure of the plurality of MEMS structures and the active transistor PUF circuitry.

Example 6 includes the PUF circuit of any of Examples 1-5, wherein the PUF circuit is configured to implement an arbiter PUF topology.

Example 7 includes the PUF circuit of any of Examples 1-6, wherein the active transistor PUF circuitry includes an array of ring oscillator loops that each include a same number of inverter components.

Example 8 includes the PUF circuit of Example 7, wherein each respective MEMS structure of the one or more MEMS structures is communicatively coupled to a respective ring oscillator loop.

Example 9 includes the PUF circuit of any of Examples 1-8, wherein each MEMS structure of the one or more MEMS structures is configured to receive a bias input.

Example 10 includes the PUF circuit of Example 9, wherein the bias input originates from the active transistor PUF circuitry.

Example 11 includes the PUF circuit of Example 10, wherein the bias input is dynamic and reconfigurable during operation.

Example 12 includes the PUF circuit of any of Examples 10-11, wherein the bias input that originates from the active transistor PUF circuitry is conditioned to bring digital oscillation down to an appropriate level required for safe input into the one or more MEMS structures.

Example 13 includes the PUF circuit of any of Examples 9-12, wherein the bias input received by at least a first MEMS structure of the one or MEMS structures is different than the bias input received by another MEMS structure of the one or more MEMS structures.

Example 14 includes a device, comprising: a physical unclonable function (PUF) circuit including: one or more micro-electromechanical systems (MEMS) structures configured to provide active oscillations, charge, resistance, inductance, and/or capacitance values; and active transistor PUF circuitry communicatively coupled to the one or more MEMS structures, wherein the active transistor PUF circuitry is configured to receive a challenge input and output a PUF response in response to the challenge input, wherein the PUF response output by the active transistor PUF circuitry is generated based on the active oscillations, charge, resistance, inductance, and/or capacitance values output by the one or more MEMS structures and manufacturing variation in components of the active transistor PUF circuitry; and one or more additional circuits configured to generate the challenge input and/or utilize the PUF response for one or more cryptographic processes.

Example 15 includes the device of Example 14, wherein the one or more MEMS structures include a plurality of MEMS structures.

Example 16 includes the device of any of Examples 14-15, wherein the PUF circuit is configured to implement a ring oscillator PUF topology, wherein the active transistor PUF circuitry includes a plurality of ring oscillators communicatively coupled to one or more MEMS structures.

Example 17 includes the device of Example 16, wherein the PUF circuit further includes a respective signal conditioning circuit coupled between each respective MEMS structure of the one or more MEMS structures and the active transistor PUF circuitry.

Example 18 includes the device of any of Examples 14-17, wherein each MEMS structure of the one or more MEMS structures is configured to receive a bias input.

Example 19 includes a method, comprising: receiving, with active transistor physical unclonable function (PUF) circuitry of a PUF circuit, a PUF challenge, wherein the PUF circuit further includes one or more MEMS structures communicatively coupled to the active transistor PUF circuitry; in response to the PUF challenge, generating a PUF response to the PUF challenge, based on active oscillations, charge, resistance, inductance, and/or capacitance values output by the one or more MEMS structures and manufacturing variation in components of the active transistor PUF circuitry; and outputting the PUF response to an additional circuit.

Example 20 includes the method of Example 19, further comprising using the PUF response for one or more cryptographic processes.

Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims and the equivalents thereof.

## Claims

1. A physical unclonable function, PUF, circuit (100, 110), comprising:
one or more micro-electromechanical systems, MEMS, structures (102) configured to provide an output, wherein the output includes active oscillations, charge, resistance, inductance, and/or capacitance values; and
active transistor PUF circuitry (104) communicatively coupled to the one or more MEMS structures (102);
wherein the active transistor PUF circuitry (104) is configured to receive a challenge input and generate a PUF response in response to the challenge input, wherein the PUF response is generated based on the output provided by the one or more MEMS structures (102) and manufacturing variation in components of the active transistor PUF circuitry (104);
wherein the PUF response generated by the active transistor PUF circuitry (104) is an output of the PUF circuit.

2. The PUF circuit (100, 110) of claim 1, wherein one or more MEMS structures (102) and/or the active transistor PUF circuitry (104) is used exclusively for the PUF circuit.

3. The PUF circuit (100, 110) of any of claims 1-2, wherein the one or more MEMS structures (102) include only a single MEMS structure.

4. The PUF circuit (100, 110) of any of claims 1-2, wherein the one or more MEMS structures (102) include a plurality of MEMS structures.

5. The PUF circuit (100, 110) of claim 4, wherein the PUF circuit (100, 110) further comprises a respective signal conditioning circuit coupled between each respective MEMS structure of the plurality of MEMS structures and the active transistor PUF circuitry (104).

6. The PUF circuit (100, 110) of any of claims 1-5, wherein the PUF circuit (100, 110) is configured to implement an arbiter PUF topology.

7. The PUF circuit (100, 110) of any of claims 1-6, wherein the active transistor PUF circuitry (104) includes an array of ring oscillator loops (114) that each include a same number of inverter components, wherein each respective MEMS structure of the one or more MEMS structures (102) is communicatively coupled to a respective ring oscillator loop (114).

8. The PUF circuit (100, 110) of any of claims 1-7, wherein each MEMS structure of the one or more MEMS structures (102) is configured to receive a bias input, wherein the bias input originates from the active transistor PUF circuitry (104), wherein the bias input is dynamic and reconfigurable during operation.

9. The PUF circuit (100, 110) of any of claims 1-7, wherein each MEMS structure of the one or more MEMS structures (102) is configured to receive a bias input, wherein the bias input that originates from the active transistor PUF circuitry (104) is conditioned to bring digital oscillation down to an appropriate level required for safe input into the one or more MEMS structures (102).

10. The PUF circuit (100, 110) of any of claims 1-7, wherein each MEMS structure of the one or more MEMS structures (102) is configured to receive a bias input, wherein the bias input received by at least a first MEMS structure of the one or MEMS structures is different than the bias input received by another MEMS structure of the one or more MEMS structures (102).
